# EUROPÄISCHE PATENTSCHRIFT

(11) **EP 0 854 407 B1**
(45) Veröffentlichungstag und Bekanntmachung des Hinweises auf die Patenterteilung: **20.10.1999**
(21) Anmeldenummer: 98100092.0
(22) Anmeldetag: 07.01.1998
(51) Int. Cl.: G05D 16/06, G05D 16/10, G05D 16/20, G05D 16/08, G05D 23/19

(54) **Gas-Druckregelgerät**
Gas pressure regulator
Appareil de régulation de pression de gaz

(30) Priorität: 17.01.1997 DE 19701401
(43) Veröffentlichungstag der Anmeldung: 22.07.1998
(73) Patentinhaber: GMT GASELAN Gas-, Mess- und Regeltechnik GmbH & Co. KG, 64521 Gross-Gerau (DE)
(72) Erfinder: Rittel, Rainer, 56179 Vallendar (DE); Ackermann, Otto, 65479 Reinheim (DE)
(74) Vertreter: Schieferdecker, Lutz, Dipl.-Ing.

(56) Entgegenhaltungen:
- EP-A- 0 473 917
- US-A- 2 599 577
- US-A- 3 556 125

## Beschreibung

Die Erfindung betrifft ein nachfolgend kurz als Druckregelgerät bezeichnetes Gas-Druckregelgerät mit einem Gehäuse und weiteren Merkmalen gemäß dem Oberbegriff des Anspruches 1.

Ein derartiges Druckregelgerät ist aus der DE 3 123 717 A1 bekannt und umfaßt einen Strömungskanal mit einem Eingang, einem Ausgang und einem Regelventil, das einen lichten Ventildurchgang und mindestens einen Ventilsitz für mindestens einen Ventilteller aufweist, der mit einer Ventilstange verbunden und mit deren Hilfe verstellbar ist. Dieses Druckregelgerät dient zum Herunterregeln des Druckes eines Gasverteilungsnetzes auf den gewünschten, für Hausgeräte (Gasöfen, Herde, Wassererhitzer) geeigneten Druck. Dabei passiert das einströmende Gas ein Stellglied, das von einer Arbeitsmembran gesteuert wird, die durch zwei parallel geschaltete Druckfedern belastet ist. Auf der einen Seite dieser Arbeitsmembran befindet sich ferner eine Ausgleichsmembran, während auf ihrer anderen Seite eine Sicherheitsmembran vorgesehen ist. Die Ausgleichsmembran eliminiert den Einfluß wechselnder Drücke im Gasverteilungsnetz und die Sicherheitsmembran verhindert ein Entweichen des Gases ins Freie bei Undichtigkeit oder Bruch der Arbeitsmembran. Obwohl das bekannte Druckregelgerät auch hohen sicherheitstechnischen Anforderungen genügt, sind keine Maßnahmen vorgesehen, um Druckstöße beim Öffnen zu vermeiden oder wenigstens zu reduzieren.

Der Erfindung liegt daher die Aufgabe zugrunde, Maßnahmen vorzusehen, mit deren Hilfe sich bei einem Gas-Druckregelgerät der hier interessierenden Art die beim Öffnen auftretenden Druckstöße minimieren lassen.

Zur Lösung dieser Aufgabe sieht die Erfindung mit den Merkmalen des kennzeichnenden Teiles des Anspruches 1 vor, daß das Regelventil eingangsseitig und ausgangsseitig mindestens je einen Ventilsitz und ferner eingangsseitig und ausgangsseitig mindestens je einen Ventilteller aufweist, und daß die Länge des Ventildurchganges in axialer Richtung veränderbar ist.

Der Ventildurchgang wird von einer Düse gebildet. Durch die Verwendung einer verlängerbaren Düse mit Ventilsitzen an ihren beiden Enden und mit jeweils zugeordneten Ventiltellern lassen sich die gewünschten Funktionen in hervorragender Weise erzielen, wobei der Öffnungsweg durch die relativ zueinander bewegbaren Ventilsitze vergleichsweise sehr lang sein kann. Dies hat schließlich zur Folge, daß sich Druckspitzen und Druckstöße beim Verbraucher weitgehend vermeiden lassen, wenn sich das Regelventil nach einem Schließen wegen Gasmangels wieder öffnet.

Weitere Merkmale der Erfindung gehen aus Unteransprüchen im Zusammenhang mit der Beschreibung und der Zeichnung hervor.

Die Erfindung wird nachstehend anhand eines Ausführungsbeispieles, das in den Figuren dargestellt ist, näher beschrieben. Dabei zeigen:
- Fig. 1:: einen Schnitt durch ein Gas-Druckregelgerät;
- Fig. 2:: einen Schnitt längs der Linie II-II in Fig. 1;
- Fig. 3:: im Schnitt sowie schematisch und in größerem Maßstab eine Darstellung des Regelventiles in der Arbeits- bzw. Regelposition;
- Fig. 4:: eine Ansicht wie in Fig. 3 bei Gasmangel mit geschlossenem Gasmangelteller in nochmals anderem Maßstab,
- Fig. 5:: eine Ansicht wie in Fig. 4, sobald der Druck im Ausgangskanal steigt;
- Fig. 6:: eine Ansicht wie in Fig. 5, kurz bevor sich das Düsen-Verlängerungsteil von der Ventilstange löst und sich zurück in seine Ausgangslage bewegt und
- Fig. 7:: eine Ansicht wie in Fig. 3 mit dem Regelventil in der Schließdruckstellung.

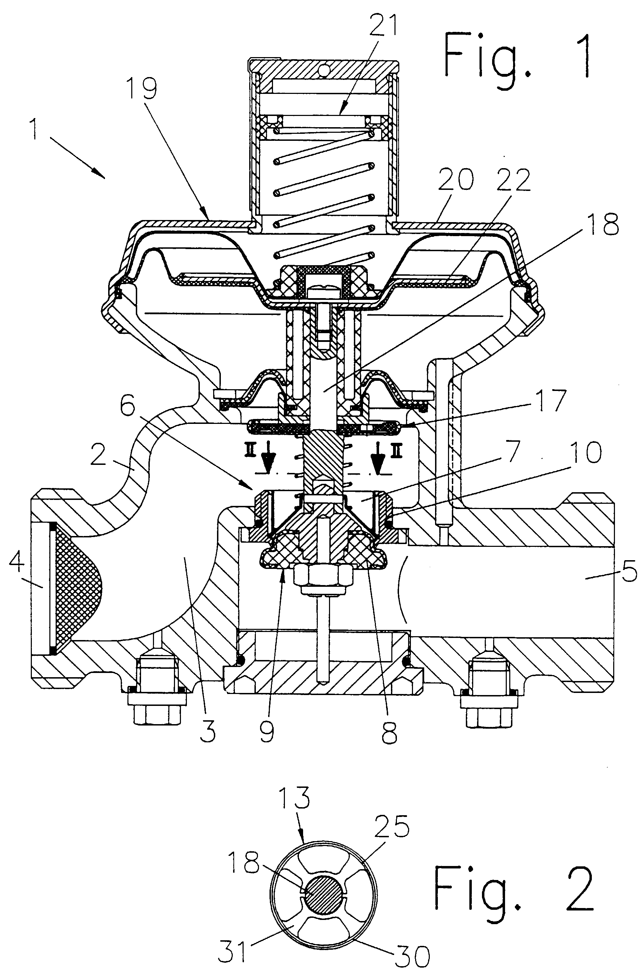

Ein Gas-Druckregelgerät 1 umfaßt gemäß Fig. 1 ein Gehäuse 2 mit einem Strömungskanal 3, der einen Eingang 4 und einen Ausgang 5 aufweist. Zwischen Eingang 4 und Ausgang 5 befindet sich ein Regelventil 6 mit einem Ventildurchgang 7, dessen lichter Ausgangsquerschnitt mit Hilfe eines als Reglerteller 8 dienenden Ventiltellers 9 veränderbar ist. Zur Bildung des Ventildurchganges 7 dient eine Düse 10 mit einer Bohrung 11. Die Düse 10 besteht aus einem starr angeordneten, stationären Düsenteil 12 und einem zur Düsenverlängerung dienenden, axial beweglichen Düsen-Verlängerungsteil 13.

Gemäß Ausführungsbeispiel weist die Düse 10 beziehungsweise konkret das stationär angeordnete Düsenteil 12 eingangsseitig einen Ventilsitz 14 und ausgangsseitig einen Ventilsitz 15 auf. Der Ventilsitz 14 ist einem als Gasmangelteller 16 dienenden Ventilteller 17 zugeordnet und der ausgangsseitig angeordnete Ventilsitz 15 ist dem als Reglerteller 8 dienenden Ventilteller 9 zugeordnet. Eine Ventilstange 18 dient zur Steuerung der Ventilteller 9 und 17 und wird selbst mit Hilfe eines Stellantriebes 19 gesteuert, der in bekannter Weise ein Gehäuse 20, eine Einrichtung 21 zur Einstellung des gewünschten Druckes, eine Arbeitsmembran 22 und so weiter aufweist. Da es im Rahmen der Erfindung auf den Stellantrieb 19 nicht ankommt und seine Einzelteile grundsätzlich bekannt sind, ist eine weitergehende Beschreibung hier nicht erforderlich.

Zur Erzielung der funktionsbedingten Veränderungen der axialen Länge des Ventildurchganges 7 dient das Düsen-Verlängerungsteil 13, das gemäß Ausführungsbeispiel eine Innenhülse 25 ist. Sie bildet zweckmäßigerweise zusammen mit einer Außenhülse 26 die Düse 10. Die Innenhülse 25 und die Außenhülse 26 besitzen jeweils die Form von Ringen bzw. von kurzen Rohrstücken, wobei ferner die Außenhülse 26 innen in axialem Abstand voneinander zwei axial einwärts gerichtete Halte- und Führungsrippen 27, 28 zur Begrenzung der axialen Bewegbarkeit der Innenhülse 25 aufweist. Die Innenhülse 25 wiederum weist außen an ihrem einen, ausgangsseitigen Ende 29 einen radial auswärts gerichteten, den Halte- und Führungsrippen 27, 28 zugeordneten Halteflansch 30 auf. Mit Hilfe des Halteflansches 30 ist die Innenhülse 25 nur zwischen den Halte- und Führungsrippen 27 und 28 der Außenhülse 26 bewegbar.

Die als Düsen-Verlängerungsteil 13 dienende Innenhülse 25 weist zur Lagerung an der Ventilstange 18 dieser zugeordnete Führungs- und Haltearme 31 auf. Mit Hilfe dieser Führungs- und Haltearme 31 und mindestens einer ihnen zugeordneten Halte- und Rastnut 32 an der Führungsstange 18 läßt sich die Innenhülse 25 lösbar mit der Führungsstange 18 verbinden und kann von dieser in axialer Richtung bewegt werden.

Zweckmäßigerweise ist ferner auch noch ein elastisches Element 33 vorgesehen, das die Innenhülse 25 beziehungsweise das Düsen-Verlängerungsteil 13 beaufschlagt. Das elastische Element 33 kann ein Druckfederelement sein und ist gemäß Ausführungsbeispiel zwischen dem eingangsseitig angeordneten Ventilteller 17 und dem Düsen-Verlängerungsteil 13 angeordnet.

Wie die Figuren ferner zeigen, weist das Regelventil 6 eingangsseitig den starr angeordneten Ventilsitz 14 und einen in axialer Richtung beweglich angeordneten Ventilsitz 34 am Düsen-Verlängerungsteil 13 beziehungsweise an der Innenhülse 25 auf.

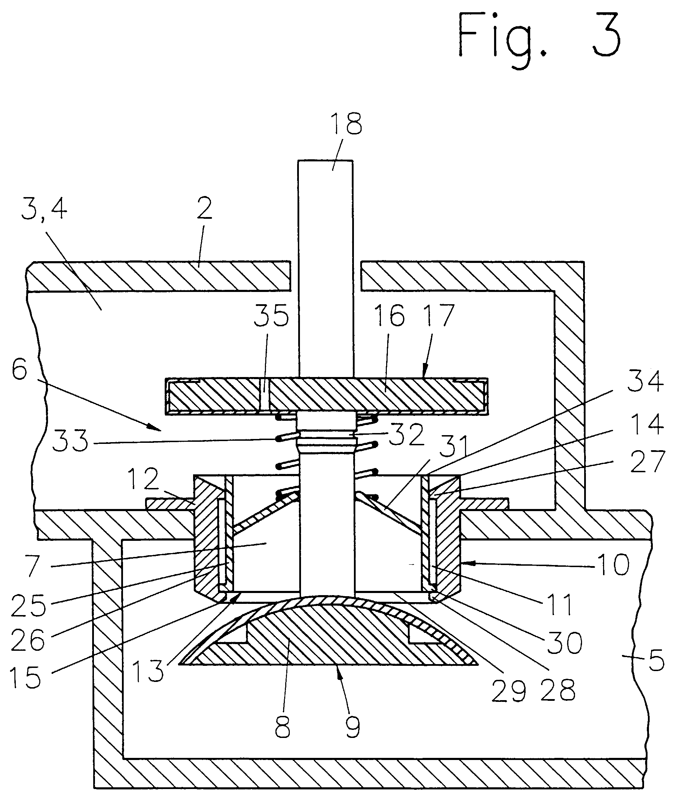

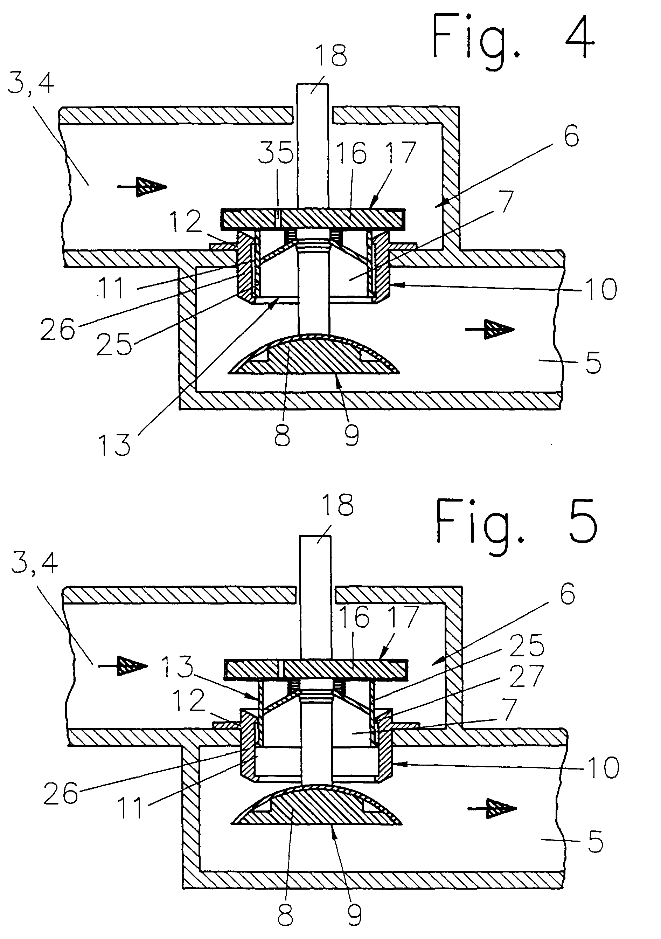

Der Durchmesser der Bohrung 11 im Außenring 26 bzw. der Halte- und Führungsrippen 27, 28 und der Außenumfang der Innenhülse 25 sind schließlich derart bemessen, daß ein Leckstrom fließen kann. Darüber hinaus sind die Abmessungen der verschiedenen Teile des Regelventiles 6 derart gewählt, daß sich das Düsen-Verlängerungsteil 13 von der Ventilstange 18 bei einer Bewegung in Öffnungsrichtung aus einer Gasmangel-Schließstellung löst, bevor der Reglerteller 8 an der Düse 10 ausgangsseitig anliegt. Sowohl der Leckstrom als auch eine Gasmangelöffnung 35 in dem Gasmangelteller 16 dienen dazu, daß das Regelventil 6 nach einem Schließen wegen eines Gasmangels wieder in die Regelposition gemäß Fig. 3 zurückkehrt.

Für die Funktion des Druckregelgerätes 1 gilt ferner folgendes.

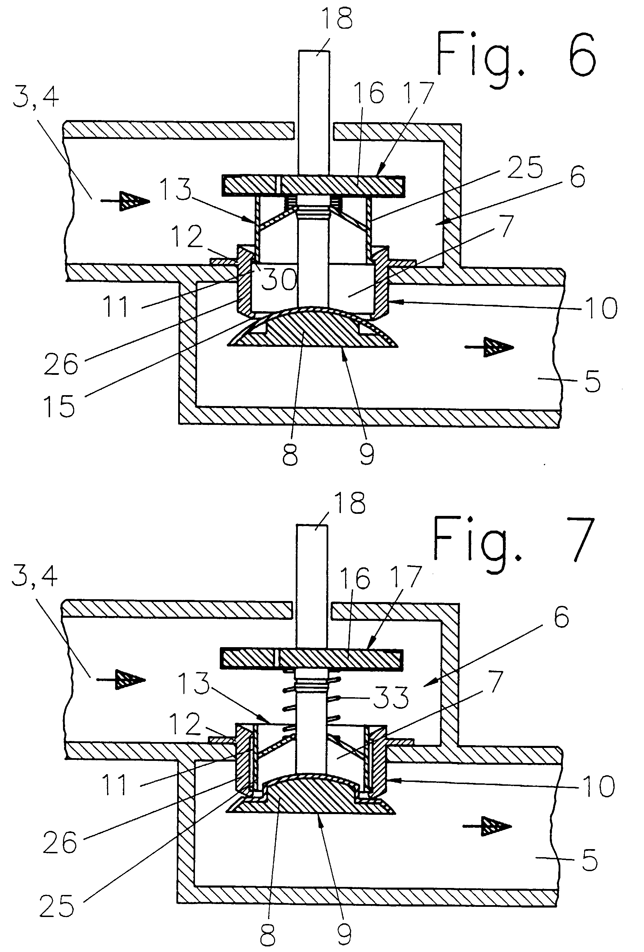

Wenn in der Regelposition gemäß Fig. 3 der Eingangsdruck fällt, so öffnet der Stellantrieb den wirksamen Ventildurchgang 7 mit Hilfe des Reglertellers 8 mehr und mehr. Fällt jetzt der Eingangsdruck zusätzlich ab, so daß der Reglerteller 8 vollständig geöffnet ist, so legt sich der Gasmangelteller 16 auf die Düse 10 (Fig. 4) und verhindert dadurch eine weitere Gaszufuhr zum Verbraucher. Bedingt durch die gewählten Abmessungen der verschiedenen Teile rastet vorher das Düsenverlängerungsteil 13 bzw.die Innenhülse 25 mit ihren Führungs- und Haltearmen 31 an der Ventilstange 18 ein. Eine gewisse Gasmenge strömt durch die Gasmangelöffnung 35 im Gasmangelteller 16 in den Ausgangskanal des Druckregelgerätes 1. Steigt der Eingangsdruck wieder an und sind alle mit dem Ausgang 5 verbundenen Verbrauchsgeräte geschlossen, so baut sich der Ausgangsdruck auf. Dadurch bewegen sich der Gasmangelteller 16 und die starr mit ihm verbundene Ventilstange 18 nach oben, wobei die Ventilstange zugleich das eingerastete Düsenverlängerungsteil 13 nach oben zieht (Fig. 5). Die zu diesem Zeitpunkt zu dem Ausgang 5 strömende Gasmenge wird im wesentlichen durch die Passung zwischen Innenhülse 25 und Aussenhülse 26, also zwischen Düse 10 und Düsenverlängerungsteil 13 sowie durch die Gasmangelöffnung 35 im Gasmangelteller 16 bestimmt und besitzen einen Einfluß auf die Anstiegsgeschwindigkeit des tatsächlich herrschenden Ausgangsdruckes. Unmittelbar bevor die Membrane des Reglertellers 8 an dem Ventilsitz 15 der Düse 10 anliegt, erreicht das Düsenverlängerungsteil 13 bzw. die Innenhülse 25 einen oberen Anschlag in Gestalt der eingangsseitig angeordneten Halte- und Führungsrippen 27 an der Außenhülse 26. Aufgrund der Abmessungen der Teile kann sich die Ventilstange 18 auch jetzt noch weiter in Öffnungsrichtung bewegen, so daß dadurch das Düsenverlängerungsteil 13 ausrastet. Mit Hilfe des elastischen Elementes 33 wird dann noch sichergestellt, daß das Düsenverlängerungsteil 13 beziehungsweise die Innenhülse 25 mit ihrem ausgangsseitig befindlichen Halteflansch 30 an der unteren Halte- und Führungsrippe 28 der Düse 10 beziehungsweise Außenhülse 26 aufliegt und somit den maximalen Querschnitt zwischen Gasmangelteller 16 und Düse 10 freigibt. Das Druckregelgerät 1 befindet sich jetzt wieder in seiner Schließdruckstellung (Fig. 7).

Obwohl die Figuren ein konkretes Ausführungsbeispiel zeigen, versteht es sich, daß das Düsenverlängerungsteil 13 unmittelbar oder auch mittelbar mit der Ventilstange 18 verbindbar und von ihr lösbar ist.

## Patentansprüche

1. Gas-Druckregelgerät mit einem Gehäuse (2), das einen Strömungskanal (3) mit einem Eingang (4) und einem Ausgang (5) und dazwischen ein Regelventil (6) umfaßt, das einen Ventildurchgang (7) und mindestens einen Ventilsitz für mindestens einen Ventilteller aufweist, der mit einer Ventilstange (18) verbunden und mit deren Hilfe verstellbar ist, dadurch gekennzeichnet, daß das Regelventil (6) eingangsseitig und ausgangsseitig je mindestens einen Ventilsitz (14, 15, 34) und ferner eingangsseitig und ausgangsseitig je mindestens einen Ventilteller (9, 17) aufweist und daß die Länge des Ventildurchganges (7) in axialer Richtung veränderbar ist.

2. Gas-Druckregelgerät nach Anspruch 1, dadurch gekennzeichnet, daß die Ventilteller (9, 17) in starrem Abstand zueinander angeordnet sind.

3. Gas-Druckregelgerät nach mindestens einem der vorhergehenden Ansprüche, dadurch gekennzeichnet, daß der eingangsseitig angeordnete Ventilteller (17) als Gasmangelteller (16) eine Gasmangelöffnung (35) aufweist und daß der andere, ausgangsseitig angeordnete Ventilteller (9) ein Reglerteller (8) ist.

4. Gas-Druckregelgerät nach mindestens einem der vorhergehenden Ansprüche, dadurch gekennzeichnet, daß das Regelventil (6) zur Bildung des Ventildurchganges (7) eine Düse (10) mit einer Bohrung (11) und mit Ventilsitzen (14, 15) an ihren beiden Enden umfaßt und daß ein axial bewegliches Düsen-Verlängerungsteil (13) zum Verändern der Länge des Ventildurchganges (7) vorgesehen ist.

5. Gas-Druckregelgerät nach mindestens einem der vorhergehenden Ansprüche, dadurch gekennzeichnet, daß das Düsen-Verlängerungsteil (13) eine axial bewegliche Innenhülse (25) ist.

6. Gas-Druckregelgerät nach mindestens einem der vorhergehenden Ansprüche, dadurch gekennzeichnet, daß ein Teil der als Ventildurchgang (7) dienenden Bohrung (11) ortsfest ist und daß das Düsen-Verlängerungsteil in dem ortsfesten Teil der Bohrung (11) teleskopartig axial verschiebbar ist.

7. Gas-Druckregelgerät nach mindestens einem der vorhergehenden Ansprüche, dadurch gekennzeichnet, daß zur Bildung der Düse (10) eine Außenhülse (26) vorgesehen ist und innen in axialem Abstand voneinander zwei axial einwärts gerichtete Halte- und Führungsrippen (27, 28) für die Innenhülse (25) aufweist und daß die Innenhülse (25) außen an ihrem einen, ausgangsseitigen Ende (29) einen radial auswärts gerichteten, den Halte- und Führungsrippen (27, 28) zugewandten Halteflansch (30) aufweist.

8. Gas-Druckregelgerät nach mindestens einem der vorhergehenden Ansprüche, dadurch gekennzeichnet, daß das eingangsseitige, freie Ende der Innenhülse (25) einen eingangsseitig zweiten Ventilsitz (34) aufweist.

9. Gas-Druckregelgerät nach mindestens einem der vorhergehenden Ansprüche, dadurch gekennzeichnet, daß die als Düsen-Verlängerungsteil (13) dienende Innenhülse (25) zur Lagerung an der Ventilstange (18) dieser zugeordnete Führungs- und Haltearme (31) aufweist.

10. Gas-Druckregelgerät nach mindestens einem der vorhergehenden Ansprüche, dadurch gekennzeichnet, daß die Führungsstange (18) mindestens eine der Innenhülse (25) zugeordnete Halte- und Rastnut (32) aufweist.

11. Gas-Druckregelgerät nach mindestens einem der vorhergehenden Ansprüche, dadurch gekennzeichnet, daß ein elastisches Element (33) das Düsen-Verlängerungsteil (13) beaufschlagt.

12. Gas-Druckregelgerät nach mindestens einem der vorhergehenden Ansprüche, dadurch gekennzeichnet, daß das elastische Element (33) in Form eines Druckfederelementes zwischen dem eingangsseitig angeordneten Ventilteller (17) und dem Düsen-Verlängserungsteil (13) angeordnet ist.

13. Gas-Druckregelgerät nach mindestens einem der vorhergehenden Ansprüche, dadurch gekennzeichnet, daß der Durchmesser der Bohrung (11) bzw. der Halte- und Führungsrippen (27, 28) im Außenring (26) und der Außenumfang der Innenhülse (25) derart bemessen sind, daß ein Leckstrom fließt.

14. Gas-Druckregelgerät nach mindestens einem der vorhergehenden Ansprüche, dadurch gekennzeichnet, daß das Regelventil (6) eingangsseitig einen starr angeordneten Ventilsitz (14) und einen in axialer Richtung beweglich angeordneten Ventilsitz (34) aufweist.

15. Gas-Druckregelgerät nach mindestens einem der vorhergehenden Ansprüche, dadurch gekennzeichnet, daß das Düsen-Verlängerungsteil (13) unmittelbar oder mittelbar mit der Ventilstange (18) verbindbar und von ihr lösbar ist.

16. Gas-Druckregelgerät nach mindestens einem der vorhergehenden Ansprüche, dadurch gekennzeichnet, daß die Abmessungen derart gewählt sind, daß sich das Düsen-Verlängerungsteil (13) von der Ventilstange (18) bei einer Bewegung in Öffnungsrichtung aus der Gasmangel-Schließstellung löst, bevor der Reglerteller (8) an der Düse (10) ausgangsseitig anliegt.

## Claims

1. A gas pressure regulating device comprising a housing (2) which includes a flow duct (3) with an intake (4) and an outlet (5) and therebetween a regulating valve (6) which has a valve passage (7) and at least one valve seat for at least one valve head which is connected to a valve stem (18) and is displaceable by means thereof, characterised in that at the intake side and the outlet side the regulating valve (6) has at least one respective valve seat (14, 15. 34) and also at the intake side and the outlet side it has at least one respective valve head (9. 17) and that the length of the valve passage (7) is variable in the axial direction.

2. A gas pressure regulating device according to claim 1 characterised in that the valve heads (9, 17) are arranged at a fixed spacing relative to each other.

3. A gas pressure regulating device according to at least one of the preceding claims characterised in that the valve head (17) arranged at the inlet side as the gas failure head (16) has a gas failure opening (35) and that the other valve head (9) arranged at the outlet side is a regulator head (8).

4. A gas pressure regulating device according to at least one of the preceding claims characterised in that the regulating valve (6) to form the valve passage (7) has a nozzle (10) with a bore (11) and with valve seats (14, 15) at its two ends and that an axially movable nozzle extension portion (13) is provided for varying the length of the valve passage (7).

5. A gas pressure regulating device according to at least one of the preceding claims characterised in that the nozzle extension portion (13) is an axially movable internal sleeve (25).

6. A gas pressure regulating device according to at least one of the preceding claims characterised in that a part of the bore (11) which serves as the valve passage (7) is stationary and that the nozzle extension portion is telescopically axially displaceable in the stationary part of the bore (11).

7. A gas pressure regulating device according to at least one of the preceding claims characterised in that to form the nozzle (10) there is provided an external sleeve (26) and internally at an axial spacing from each other it has two radially inwardly directed holding and guide ribs (27. 28) for the internal sleeve (25) and that the internal sleeve (25) has on its outside at its one end (29) toward the outlet a radially outwardly directed holding flange (30) which is towards the holding and guide ribs (27, 28).

8. A gas pressure regulating device according to at least one of the preceding claims characterised in that the free end of the internal sleeve (25) at the intake side has a second valve seat (34) at the intake side.

9. A gas pressure regulating device according to at least one of the preceding claims characterised in that the internal sleeve (25) serving as the nozzle extension portion (13), for mounting on the valve stem (18), has guide and holding arms (31) associated therewith.

10. A gas pressure regulating device according to at least one of the preceding claims characterised in that the guide stem (18) has at least one holding and retaining groove (32) associated with the internal sleeve (25).

11. A gas pressure regulating device according to at least one of the preceding claims characterised in that an elastic element (33) acts on the nozzle extension portion (13).

12. A gas pressure regulating device according to at least one of the preceding claims characterised in that the elastic element (33) in the form of a compression spring element is arranged between the nozzle extension portion (13) and the valve head (17) arranged at the intake side.

13. A gas pressure regulating device according to at least one of the preceding claims characterised in that the diameter of the bore (11) or the holding and guide ribs (27, 28) in the external ring (26) and the external periphery of the internal sleeve (25) are such that a leakage flow flows.

14. A gas pressure regulating device according to at least one of the preceding claims characterised in that at the intake side the regulating valve (6) has a rigidly arranged valve seat (14) and a valve seat (34) which is arranged movably in the axial direction.

15. A gas pressure regulating device according to at least one of the preceding claims characterised in that the nozzle extension portion (13) can be directly or indirectly connected to the valve stem (18) and released therefrom.

16. A gas pressure regulating device according to at least one of the preceding claims characterised in that the dimensions are so selected that the nozzle extension portion (13) is released from the valve stem (18) upon a movement in the opening direction out of the gas failure closure position before the regulator head (8) bears against the nozzle (10) at the outlet side.

## Revendications

1. Appareil de régulation de pression de gaz avec un boîtier (2) qui comporte un canal d'écoulement (3) avec une entrée (4) et une sortie (5) et entre celles-ci une vanne de régulation (6) qui présente un boisseau (7) et au moins un siège de vanne pour au moins une tête de vanne qui est reliée à une tige de vanne (18) et est réglable à l'aide de celle-ci, caractérisé en ce que la vanne de régulation (6) présente côté entrée et côté sortie respectivement au moins un siège de vanne (14, 15, 34) et en outre côté entrée et côté sortie respectivement au moins une tête de vanne (9, 17) et que la longueur du boisseau (7) est modifiable dans la direction axiale.

2. Appareil de régulation de pression de gaz selon la revendication 1, caractérisé en ce que les têtes de vanne (9, 17) sont disposées selon un écart rigide l'une à l'autre.

3. Appareil de régulation de pression de gaz selon au moins l'une des revendications précédentes, caractérisé en ce que la tête de vanne (17) disposée côté entrée présente comme tête de sûreté (16) une ouverture de sûreté (35) et que l'autre tête de vanne (9) disposée côté sortie est une tête de régulation (8).

4. Appareil de régulation de pression de gaz selon au moins l'une des revendications précédentes, caractérisé en ce que la vanne de régulation (6), pour former le boisseau (7), comprend une buse (10) avec un perçage (11) et avec des sièges de vanne (14, 15) à ses deux extrémités et qu'il est prévu une partie d'allongement de buse (13) déplaçable axialement pour modifier la longueur du boisseau (7).

5. Appareil de régulation de pression de gaz selon au moins l'une des revendications précédentes, caractérisé en ce que la partie d'allongement de buse (13) est une douille intérieure (25) mobile axialement.

6. Appareil de régulation de pression de gaz selon au moins l'une des revendications précédentes, caractérisé en ce qu'une partie du perçage (11) servant de boisseau (7) est fixe et que la partie d'allongement de buse est déplaçable axialement à la manière d'un télescope dans la partie fixe du perçage (11).

7. Appareil de régulation de pression de gaz selon au moins l'une des revendications précédentes, caractérisé en ce qu'il est prévu pour la formation de la buse (10) une douille extérieure (26) et à l'intérieur, à une distance axiale l'une de l'autre, deux nervures de retenue et de guidage (27, 28) orientées axialement vers l'intérieur pour la douille intérieure (25), et que la douille intérieure (25) présente à l'extérieur à son extrémité (29) côté sortie une bride de retenue (30) orientée radialement vers l'extérieur, vers les nervures de retenue et de guidage (27, 28).

8. Appareil de régulation de pression de gaz selon au moins l'une des revendications précédentes, caractérisé en ce que l'extrémité libre côté entrée de la douille intérieure (25) présente un deuxième siège de vanne (34) côté entrée.

9. Appareil de régulation de pression de gaz selon au moins l'une des revendications précédentes, caractérisé en ce que la douille intérieure (25) servant de partie d'allongement de buse (13), pour le logement à la tige de vanne (18), présente des bras de guidage et de retenue (31) associés à celle-ci.

10. Appareil de régulation de pression de gaz selon au moins l'une des revendications précédentes, caractérisé en ce que la tige de guidage (18) présente au moins une rainure de retenue et d'enclenchement (32) associée à la douille intérieure (25).

11. Appareil de régulation de pression de gaz selon au moins l'une des revendications précédentes, caractérisé en ce qu'un élément élastique (33) sollicite la partie d'allongement de buse (13).

12. Appareil de régulation de pression de gaz selon au moins l'une des revendications précédentes, caractérisé en ce que l'élément élastique (33) est disposé sous la forme d'un élément de ressort de pression entre la tête de vanne (17) disposée côté entrée et la partie d'allongement de buse (13).

13. Appareil de régulation de pression de gaz selon au moins l'une des revendications précédentes, caractérisé en ce que le diamètre du perçage (11) respectivement des nervures de retenue et de guidage (27, 28) dans la bague extérieure (26) et le pourtour extérieur de la douille intérieure (25) sont dimensionnés de façon à ce que s'écoule un courant de fuite.

14. Appareil de régulation de pression de gaz selon au moins l'une des revendications précédentes, caractérisé en ce que la vanne de régulation (6) présente, côté entrée, un siège de vanne (14) disposé d'une manière rigide et un siège de vanne (34) disposé mobile dans la direction axiale.

15. Appareil de régulation de pression de gaz selon au moins l'une des revendications précédentes, caractérisé en ce que la partie d'allongement de buse (13) est apte à être reliée à et détachée directement ou indirectement de la tige de vanne (18).

16. Appareil de régulation de pression de gaz selon au moins l'une des revendications précédentes, caractérisé en ce que les dimensions sont choisies de façon que la partie d'allongement de buse (13) se détache de la tige de vanne (18) lors d'un déplacement dans la direction d'ouverture de la position de fermeture de sécurité avant que la tête de régulation (8) s'applique à la buse (10) côté sortie.
